# EUROPEAN PATENT APPLICATION

(11) **EP 2 236 984 A1**
(43) Date of publication of application: **06.10.2010**
(21) Application number: 09704425.9
(22) Date of filing: 21.01.2009
(51) Int. Cl.: G01C 21/00, G08G 1/09, G08G 1/14, G09B 29/00, G09B 29/10

(54) **DELIVERY SYSTEM AND IN-VEHICLE UNIT**

(30) Priority: 21.01.2008 JP 2008010667
(71) Applicant: Kabushiki Kaisha Kenwood, Hachiouji-shi Tokyo 192-8525 (JP)
(72) Inventor: HATTORI, Hiroyuki, Hachiouji-shi Tokyo 192-0363 (JP); NAGATOMO, Hideyuki, Kawasaki-shi Kanagawa 214-0023 (JP)
(74) Representative: Busch, Thomas
(86) International application number: PCT/JP2009/050812
(87) International publication number: WO 2009/093589

(57) **Abstract**

In a distribution system comprising a center device for distributing, content information and an vehicle-mounted device, when information on a parking lot that is a distribution destination exists, the center device transmits content information including the information on the parking lot to the vehicle-mounted device (step S9). This constitution enables the accurate and rapid provision of parking lot information.

## Description

### TECHNICAL FIELD

The present invention relates to a distribution system and a vehicle-mounted device.

### BACKGROUND ART

Conventionally, in a vehicle-mounted device such as a navigation device, it is possible to perform short range wireless communication with a roadside apparatus set on a road using DSRC (Dedicated Short Range Communication) or the like and receive information offering from a center apparatus via the roadside apparatus. Specifically, only while a vehicle is present within a communication range of the roadside apparatus, two-way communication between the vehicle-mounted device of a vehicle and the roadside apparatus is possible and the center apparatus distributes various kinds of content information such as an advertisement via the roadside apparatus.

Information offering taken root in areas where services are provided such as advertisements of stores and guides to medical facilities in the areas is also possible through distribution of content information (see, for example, Patent Document 1). When a user goes to a destination such as a guided store or medical facility in the area, the user can set the destination in the navigation device and cause the navigation device to display a guide route. Conveniently, the user can also search for a parking lot present around the destination from map information including information concerning parking lots associated with facility information (see, for example, Patent Document 2).
Patent Document 1: Japanese Patent Application Laid-Open No. 2007-109032
Patent Document 2: Japanese Patent Application Laid-Open No. 2002-323332

### DISCLOSURE OF THE INVENTION

### PROBLEMS TO BE SOLVED BY THE INVENTION

However, in the techniques described in Patent Documents 1 and 2, complicatedly, a user who viewed content information has to input and set as a destination an address or the like of a store that the user desires to visit. According to Patent Document 2, it is possible to search for an alliance parking lot allied with a facility at a destination. However, since the search is performed by using a database stored in a memory, a DVD, or the like in advance, when the database is old without being updated, it is unknown whether a found parking lot is still allied with the facility at present. Real-time information cannot be obtained, for example, the technology cannot cope with a change in a fee or a privilege.

It is an object of the present invention to accurately and quickly perform offering of information concerning parking lots.

### MEANS FOR SOLVING THE PROBLEMS

According to a first aspect of the present invention, a distribution system of the present invention is a distribution system including: a center apparatus that distributes content information; and a vehicle-mounted device, wherein
the center apparatus includes: a control unit, a storage unit, and a communication unit,
the storage unit has stored therein the content information,
the control unit determines presence or absence of information concerning parking lots by referring to the content information stored in the storage unit, and
when the control unit determines that information concerning parking lots to be distributed is present, the center apparatus transmits, with the communication unit, content information including the information concerning parking lots to the vehicle-mounted device.

In the distribution system of the present invention, further,
the information concerning parking lots is information concerning alliance parking lots designated for an alliance at an object point where a service is provided, and
the vehicle-mounted device
creates, when the information concerning the alliance parking lots is included in the content information received from the center apparatus, a parking lot list showing a list of alliance parking lots on the basis of the information concerning alliance parking lots and displays the parking lot list.

In the distribution system of the present invention, further,
the vehicle-mounted device
calculates, when input for selecting any one alliance parking lot among the alliance parking lots shown in the parking lot list as a destination is performed, a guide route having, as a destination, the alliance parking lot selected according to the input and displays the guide route.

In the distribution system of the present invention, further,
the information concerning parking lots is information concerning parking lots registered in advance in the center apparatus, and
the vehicle-mounted device
searches for, when the information concerning parking lots registered in advance in the center apparatus is included in the content information received from the center apparatus, parking lots around the destination on the basis of the information concerning parking lots, creates a parking lot list showing a list of searched parking lots, and displays the parking lot list.

In the distribution system of the present invention, further,
the center apparatus
transmits full or empty information concerning parking lots registered in advance to the vehicle-mounted device with the full or empty information included in the content information to be distributed.

In the distribution system of the present invention, further,
the vehicle-mounted device
creates, when the full or empty information is included in the content information received from the center apparatus, on the basis of the full or empty information, the parking lot list showing full or empty information concerning the respective parking lots and displays the parking lot list.

In the distribution system of the present invention, further,
the vehicle-mounted device
stores vehicle information concerning a vehicle mounted with the vehicle-mounted device and information concerning vehicle limit of parking lots registered in the vehicle-mounted device in advance and selects parking lots shown in the parking lot list on the basis of the stored vehicle information and information concerning vehicle limit.

In the distribution system of the present invention, further,
the center apparatus
transmits content information including information concerning vehicle limit of parking lots registered in advance to the vehicle-mounted device, and
the vehicle-mounted device
stores vehicle information concerning a vehicle mounted with the vehicle mounted device and selects, when information concerning vehicle limit of parking lots is included in the content information received from the center apparatus, parking lots shown in the parking lot list on the basis of the information concerning vehicle limit and the stored vehicle information.

In the distribution system of the present invention, further
the vehicle-mounted device
receives content information from the center apparatus through DSRC communication and
acquires full or empty information concerning parking lots registered in advance in the center apparatus from the center apparatus through IP communication.

A vehicle-mounted device of the present invention includes:
display means;
DSRC communication means for performing, via a roadside apparatus, DSRC communication with a center apparatus that distributes content information; and
control means for creating, when information concerning alliance parking lots designated for an alliance at an object point where a service is provided is included in the content information received from the center apparatus, a parking lot list showing a list of alliance parking lots on the basis of the information concerning alliance parking lots and displays the parking lot list on the display means.

The vehicle-mounted device of the present invention further includes
input means, and
the controls means calculates, when input for selecting any one alliance parking lot among the alliance parking lots shown in the parking lot list as a destination is performed, a guide route having, as a destination, the alliance parking lot selected according to the input and displays the guide route.

According to a second aspect of the present invention, a vehicle-mounted device of the present invention includes:
display means;
DSRC communication means for performing, via a roadside apparatus, DSRC communication with a center apparatus that distributes content information; and
control means for searching for, when information concerning parking lots registered in advance in the center apparatus is included in the content information received from the center apparatus, parking lots around a destination on the basis of the information concerning parking lots, creating a parking lot list showing a list of the searched parking lots, and displaying the parking lot list on the display means.

In the vehicle-mounted device of the present invention, further,
the control means creates, when full or empty information concerning parking lots registered in advance in the center apparatus is included in the content information received from the center apparatus, on the basis of the full or empty information, a parking lot list showing full or empty information concerning the respective parking lots and displays the parking lot list.

The vehicle-mounted device of the present invention further includes
storing means for storing vehicle information concerning a vehicle mounted with the vehicle-mounted device and information concerning vehicle limit of parking lots registered in the vehicle-mounted device in advance, and
the control means selects parking lots shown in the parking lot list on the basis of the stored vehicle information and information concerning vehicle limit.

The vehicle-mounted device of the present invention further includes
storing means for storing vehicle information concerning a vehicle mounted with the vehicle-mounted device, and
the control means selects, when information concerning vehicle limit of parking lots is included in the content information received from the center apparatus, parking lots shown in the parking lot list on the basis of the information concerning vehicle limit and the stored vehicle information.

The vehicle-mounted device of the present invention further includes
IP communication means for performing IP communication with the center apparatus, and
the control means acquires full or empty information of parking lots registered in advance in the center apparatus from the center apparatus via the IP communication means.

### EFFECTS OF THE INVENTION

According to the present invention, it is possible to easily determine presence or absence of alliance of parking lots and parking lots around a vehicle-mounted device by referring to information concerning parking lots in the vehicle-mounted device. Therefore, it is possible to accurately and quickly perform offering of information concerning parking lots in providing content information.

### BRIEF DESCRIPTION OF THE DRAWINGS

FIG. 1 is a diagram showing a distribution system in an embodiment of the present invention;
FIG. 2 is a diagram for explaining a mutual communication area of roadside apparatuses shown in FIG. 1;
FIG. 3 is a diagram showing the functional configuration of a vehicle-mounted device shown in FIG. 1;
FIG. 4 is a diagram showing an example of a parking lot DB stored by the vehicle-mounted device;
FIG. 5 is a diagram showing the functional configuration of a center apparatus shown in FIG. 1;
FIG. 6 is a diagram for explaining a flow of processing in distributing content information in the distribution system;
FIG. 7 is a diagram for explaining a flow of processing in reproducing content information received in the vehicle-mounted device;
FIG. 8 is a diagram for explaining a flow of processing in reproducing content information received in the vehicle-mounted device;
FIG. 9 is a diagram for explaining a flow of processing in reproducing content information received in the vehicle-mounted device;
FIG. 10 is a diagram for explaining a flow of processing in reproducing content information received in the vehicle-mounted device;
FIG. 11 is a diagram for explaining a flow of processing in reproducing content information received in the vehicle-mounted device;
FIG. 12A is an example of a content screen;
FIG. 12B is an example of a map screen including detail information concerning an object point;
FIG. 12C is an example of a map screen including a parking lot list;
FIG. 12D is an example of a map screen including detail information concerning alliance parking lots;
FIG. 13 is a flowchart showing a flow of processing after acquisition of full or empty information; and
FIG. 14 is a diagram for explaining a flow of processing in reproducing content information received in a vehicle-mounted device according to a second embodiment.

### DESCRIPTION OF REFERENCES

- 100: distribution system
- 10: vehicle-mounted device
- 1: car navigation unit
- 1a: car navigation control unit
- 1c: map storage unit
- 1d: input unit
- 1e: display unit
- 1f: storage unit
- 3: DSRC unit
- 3b: DSRC communication unit
- 3c: storage unit
- M: uplink information storage area
- 4: control section
- 5: IP communication unit
- 20A, 20B: roadside apparatuses
- 20C: wireless access point
- 30: center apparatus
- 31: control unit
- 34: storage unit

### BEST MODES FOR CARRYING OUT THE INVENTION

### (First Embodiment)

In a first embodiment, a case in which information concerning alliance parking lots is provided as information concerning parking lots is explained.

First, a configuration is explained.

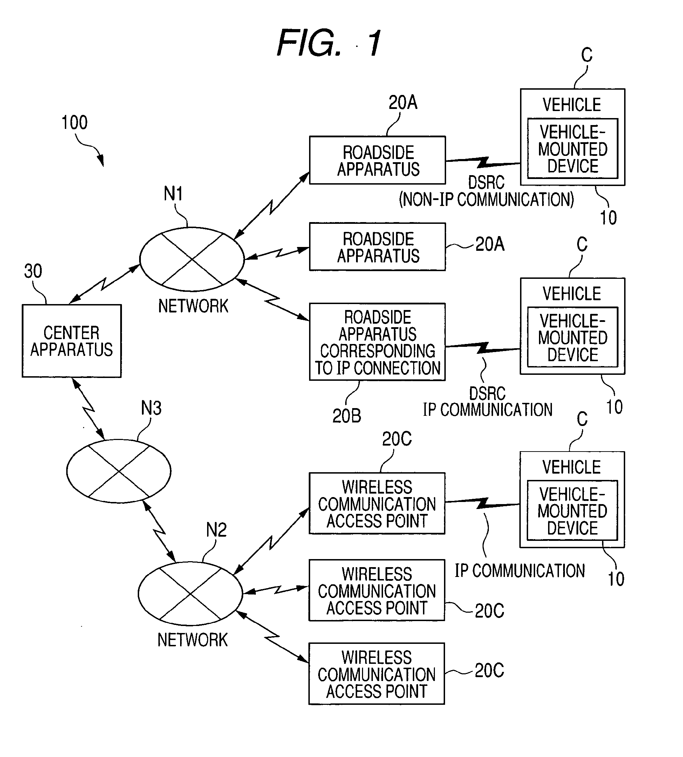

In FIG. 1, a distribution system 100 according to this embodiment is shown.

The distribution system 100 includes, as shown in FIG. 1, vehicle-mounted devices 10 mounted on vehicles C, roadside apparatuses 20A and 20B, and a center apparatus 30. The roadside apparatuses 20A and 20B are connected to the center apparatus 30 via a network N1 and can perform DSRC communication with the vehicle-mounted devices 10. In the distribution system 100, the center apparatus 30 distributes content information to the vehicle-mounted devices 10 via the roadside apparatuses 20A and 20B. The content information is explained later.

In the distribution system 100, mutual communication by IP (Internet Protocol) communication is also possible between the center apparatus 30 and the vehicle-mounted devices 10. In the DSRC communication, the vehicle-mounted devices 10 only receive distribution of the content information from the center apparatus 30 in a communication area of communication with the roadside apparatuses 20A and 20B. However, according to the IP communication, it is possible to request information offering from the vehicle-mounted devices 10 to the center apparatus 30 even on the outside of the communication area of DSRC.

As a method of the IP communication, there is a method in which the roadside apparatus 20B applicable not only to the DSRC communication but also to the IP communication is provided and the center apparatus 30 and the vehicle-mounted devices 10 perform communication via this roadside apparatus 20B. There is also a method in which, as shown in FIG. 1, the vehicle-mounted devices 10 make connection to wireless communication access points 20C provided in various places and perform the IP communication with the center apparatus 30 from the wireless communication access points 20C via networks N2 and N3.

As a system of the IP communication, besides PDC (Personal Digital Cellular) in which radio communication devices such as cellular phones are used, CDMA (Code Division Multiple Access), and PHS (Personal Handyphone System), any system may be used such as wireless LANs (Local Area Networks) of IEEE802.11a/b/g/h and the like and WiMAX (Worldwide Interoperability for Microwave Access) of IEEE802.16a/e/h. The wireless communication access points 20C are base stations for cellular phones that can be connected to the networks N2 and N3, host servers, wireless LAN routers including antennas, and the like depending on communication systems applied to the wireless communication access points 20C. The networks N2 and N3 are dedicated networks and the Internet.

The apparatuses included in the distribution system 100 are explained below.

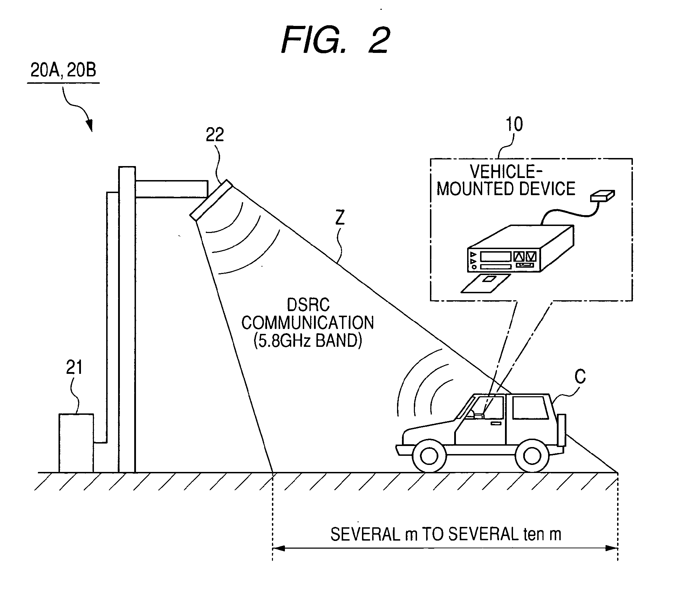

The roadside apparatuses 20A and 20B include, as shown in FIG. 2, a main body apparatus 21 and an antenna 22. The roadside apparatuses 20A and 20B radiate a radio wave of DSRC having a limited range from the antenna 22 set beside a road or above the road and form a mutual communication area Z near the roadside apparatuses 20A and 20B. The roadside apparatuses 20A and 20B can perform bidirectional short range wireless communication only with the vehicle-mounted device 10 of the vehicle C present in this mutual communication area Z.

The DSRC is a communication system employing a radio wave in the 5.8 GHz band. A communication range of the DSRC is, for example, several meters to several ten meters. Both transmission powers of the DSRC from the roadside apparatuses 20A and 20B are set to the same degree. Therefore, a mutual communication area Z formed by a plurality of the roadside apparatuses 20A and 20B is substantially fixed irrespectively of a setting location.

The main body apparatus 21 performs processing for mediating exchange of information between the vehicle-mounted device 10 and the center apparatus 30. Specifically, the main body apparatus 21 transfers information, which is received from the vehicle-mounted device 10 via the antenna 22, to the center apparatus 30 and transfers content information, which is transmitted from the center apparatus 30, to the vehicle-mounted device 10. As the main body apparatus 21, a computer including a control unit that performs information processing and communication control and a storage unit can be applied. The roadside apparatus 20B can perform not only the DSRC communication but also the IP communication as explained above.

The vehicle-mounted device 10 is mounted on the vehicle C and has, for example, a function of performing processing for ETC (Electric Toll Collection System) use by the DSRC besides a navigation function for performing, for example, processing for guide to a guide route.

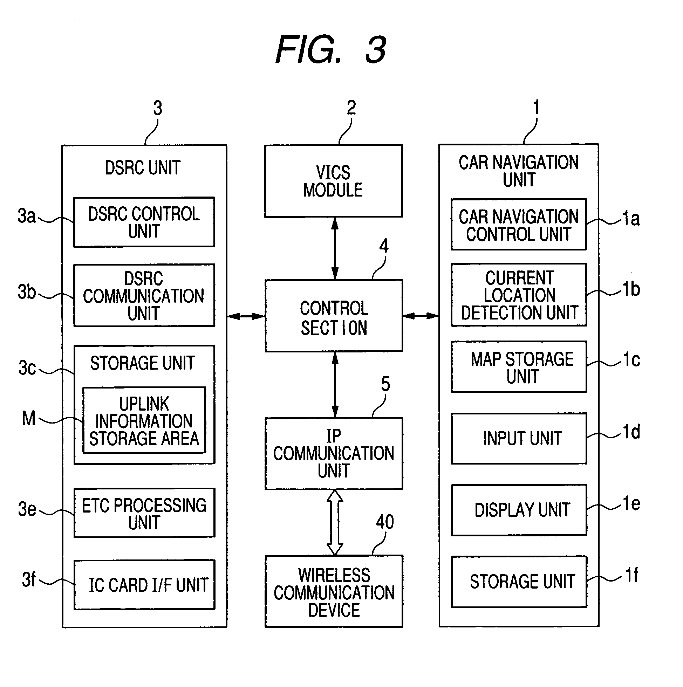

The vehicle-mounted device 10 includes, as shown in FIG. 3, a car navigation unit 1, a VICS (Vehicle Information and Communication System) module 2, a DSRC unit 3, a control section 4, and an IP communication unit 5.

The control section 4 includes a CPU (Central Processing Unit) and a RAM (Random Access Memory) and performs concentrated control of the units besides performing various kinds of arithmetic operation in cooperation with a control program stored in the storage unit 1f.

For example, the control section 4 controls DSRC communication operation of the DSRC unit 3 and IP communication operation of the IP communication unit 5. In the control of the DSRC unit 3, the control section 4 performs the control in cooperation with the DSRC control unit 3a of the DSRC unit 3. Besides, the control section 4 performs storage and reproduction control and the like for, for example, content information received from the center apparatus 30 and traffic information and the like received via the VICS module 2.

The car navigation unit 1 includes a car navigation control unit 1a, a current location detection unit 1b, a map storage unit 1c, an input unit 1d, a display unit 1e, and a storage unit 1f and performs processing related to navigation for, for example, guiding the vehicle to the guide route.

The car navigation control unit 1a calculates, on the basis of, for example, information concerning a current location acquired from the current location detection unit 1b and a map DB (database) stored in the map storage unit 1c, a guide route from the current location of the vehicle C to a destination set via the input unit 1d. The car navigation control unit 1a creates a map screen including the guide route calculated by using the map DB stored in the map storage unit 1c and causes the display unit 1e to display the map screen.

The current location detection unit 1b includes various sensors such as a GPS antenna, an angle sensor, a direction sensor, and a distance sensor and detects the current location of the vehicle C on the basis of detection results by these sensors. The GPS antenna detects a GPS signal transmitted from a GPS satellite. The angle sensor detects acceleration (a rotating speed in the horizontal direction per unit time) of the vehicle C indicating an amount of change in a moving direction. The direction sensor performs detection of geomagnetism to detect an absolute direction of the vehicle C. The current location detection unit 1b generates, on the basis of the detection results acquired from these sensors, information (latitude, longitude, etc.) of a current location indicating the current location of the vehicle C and outputs the information to the car navigation control unit 1a.

The map storage unit 1c includes a storage medium such as a memory or a DVD and has stored therein, for example, a map DB necessary for guide display, a parking lot DB, and guide information (load information, traffic jam information, etc.) received via the VICS module 2. The map DB includes a map image for display, information for route search, and information concerning points such as facilities and parks. The information concerning points is, for example, names of points, latitude and longitude, addresses, and telephone numbers.

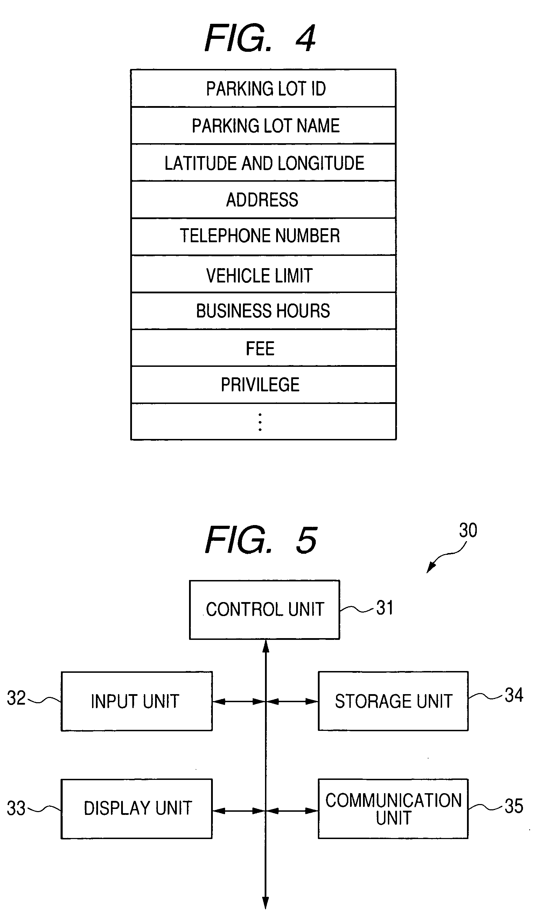

The parking lot DB includes information concerning parking lots registered in advance and is formed of, for example, a format shown in FIG. 4. As shown in FIG. 4, the parking lot DB includes an ID allocated to each of the parking lots (hereafter referred to as parking lot ID), a parking lot name, latitude and longitude where the parking lot is located, an address, a telephone number of an office or the like of the parking lot, vehicle limit (limit on vehicle width, vehicle height, weight, etc.) in the parking lot, business hours of the parking lot, a fee, and a privilege.

The input unit 1d includes operation keys and a touch panel integrally formed with a monitor of the display unit 1e. The input unit 1d generates operation signals corresponding to operation of the operation keys, the touch panel, and the like and outputs the operation signals to the car navigation control unit 1a.

The display unit 1e includes the monitor and displays various kinds of information according to display control by the control section 4 and the car navigation control unit 1a. The display unit 1e displays, for example, a setting screen, a map screen, and a display screen for content information received from the center apparatus 30.

The storage unit 1f includes a memory and has stored therein, for example, control programs executed by the control section 4 and the car navigation control unit 1a and parameters and data necessary for the execution of the programs.

The storage unit 1f has stored therein vehicle information. The vehicle information is information concerning the vehicle C and is, for example, the width, the height, the weight, and the displacement of the vehicle C.

The storage unit 1f stores the content information received from the center apparatus 30.

The VICS module 2 includes antennas respectively for optical communication, FM communication, and 2.4 GHz radio wave communication and performs the optical communication, the FM communication, and the radio wave communication with a VICS center. The VICS module 2 receives traffic jam information, road traffic information, and the like from the VICS center and outputs the information to the control section 4.

The DSRC unit 3 performs, for example, processing for ETC use by the DSRC and communication processing for receiving content information from the center apparatus 30.

The DSRC unit 3 includes, as shown in FIG. 3, a DSRC control unit 3a, a DSRC communication unit 3b, a storage unit 3c, an ETC processing unit 3e, and an 1C card I/F 3f.

The DSRC control unit 3a includes a CPU and a RAM and controls the operation of the units of the DSRC unit 3 in cooperation with a control program stored in the storage unit 3c.

For example, when settlement by the ETC is performed, the DSRC control unit 3a controls communication operation of the DSRC communication unit 3b to cause the DSRC communication unit 3b to perform transmission and reception of settlement information to and from an ETC base station (a radio base station provided near an ETC gate in order to perform ETC settlement). The DSRC control unit 3a causes the ETC processing unit 3e to perform writing processing for settlement information.

When content information is received from the center apparatus 30, the DSRC control unit 3a causes the DSRC communication unit 3b to transmit information, which is stored in an uplink information storage area M of the storage unit 3c according to an instruction of the control section 4, to the roadside apparatuses 20A and 20B. On the other hand, when content information is received by the DSRC communication unit 3b via the roadside apparatuses 20A and 20B, the DSRC control unit 3a outputs the content information to the control section 4.

The DSRC communication unit 3b includes an antenna fixedly provided on a dashboard and near an windshield of the vehicle C and performs transmission and reception of a radio wave of the DSRC to and from the roadside apparatuses 20A and 20B, the ETC base station, and the like via this antenna.

The storage unit 3c has stored therein, for example, the control program executed by the DSRC control unit 3a.

The uplink information storage area M is provided in the storage unit 3c. The uplink information storage area M is a storage area provided exclusively for offering information to the center apparatus 30. Besides uplink information, characteristic information of the vehicle-mounted device 10 is stored in the uplink information storage area M.

The characteristic information refers to information concerning device characteristics of the vehicle-mounted device 10. The characteristic information includes information such as an ID allocated to each of the vehicle-mounted devices 10 (hereafter referred to as vehicle-mounted device ID), a language that the vehicle-mounted device 10 can treat, a geodetic system of a map, a copyright management technique, the resolution of the monitor of the display unit 1e, responsiveness of SVG (Scalable Vector Graphics), and a storage capacity in which content information can be stored.

The uplink information is information used to select content information distributed in the center apparatus 30. The uplink information includes information for specifying a service enterpriser with which a user enters into agreement concerning distribute of content information, destination information, route point information, cumulative traveling distance information, past stop point information of the vehicle C, and taste information and reception and reproduction history information of the user. The uplink information is generated for each service enterpriser with contents corresponding to a service enterpriser by the control section 4 and always updated by the control section 4 such that the contents are the latest contents.

The information for specifying a service enterpriser is information for specifying a service enterpriser with which the user enters into an agreement concerning the distribution of the content information. For example, the information is an enterpriser code and an enterpriser name.

The destination information of the vehicle C is information concerning latitude and longitude of a destination set by the car navigation unit 1. The route point information is information concerning latitudes and longitudes of points where the vehicle C passes in the guide route to the destination set by the car navigation unit 1. The cumulative traveling distance information is information concerning a cumulative traveling distance of the vehicle C from a setup (start) point of the DSRC unit 3 to the present. The past stop point information is information concerning latitudes add longitudes of points where the vehicle C stopped in the past (i.e., a power for the vehicle-mounted device 10 is turned on or off) and time information.

The taste information is information used for selecting content information corresponding to the taste of the user in the center apparatus 30. The taste information includes information indicating whether the user likes or does not like each of a plurality of categories for classifying the content information. The categories indicate classification of the content information such as "life" and "shopping". The service enterpriser can arbitrarily set the taste information.

The reception and reproduction history information is an information code given to the content information distributed from the center apparatus 30 and information concerning a history of reproduction of the content information. As the information concerning a history, there is information code of content information actually displayed on the display unit 1e and reproduced in the received content information. In some case, latitude and longitude information, time information, and the like during reproduction are included.

The ETC processing unit 3e reads settlement information and the like from and writes settlement information and the like in a credit car with 1C, a debit card, or the like inserted into and removed from the IC card I/F 3f.

The IC card I/F 3f includes a slot of the credit card and the like and mediates exchange of information between an IC of the credit card or the like inserted in this slot and the ETC processing unit 3e.

The IP communication unit 5 is configured such that a wireless communication device 40 such as a cellular phone, a PHS, and a LAN card can be connected to the IP communication unit 5. The IP communication unit 5 performs IP communication with the center apparatus 30 via the wireless communication device 40 and the wireless access point 20C.

Next, the center apparatus 30 is explained.

The center apparatus 30 stores content information and distributes the content information to the vehicle-mounted device 10. In FIG. 1, only one center apparatus 30 is shown. However, the center apparatus 30 is provided for each service enterpriser that distributes content information.

In FIG. 5, the functional configuration of the center apparatus 30 is shown.

As shown in FIG. 5, the center apparatus 30 includes a control unit 31, an input unit 32, a display unit 33, a storage unit 34, and a communication unit 35.

The control unit 31 includes a CPU and a RAM and centrally controls the units besides performing various arithmetic operations in cooperation with a control program stored in the storage unit 34.

For example, the control unit 31 performs control for reading out content information stored in the storage unit 34 and distributing the content information to the vehicle-mounted device 10.

The input unit 32 includes a keyboard, receives operation input, and outputs an operation signal corresponding to the operation input to the control unit 31.

The display unit 33 includes a display and displays various screens on the display according to display control by the control unit 31.

The storage unit 34 stores, besides a program executed by the control unit 31, various data necessary for execution of the program.

When users enter into an agreement for joining a distribution service for content information, since the users perform membership registration, the storage unit 34 stores specific information such as names and addresses of the users registered as members. Besides, the storage unit 34 stores information such as vehicle-mounted device IDs of the vehicle-mounted devices 10 owned by the users and taste information of the users in a form of a database for each of the users.

The storage unit 34 has also stored therein content information that should be distributed.

The content information refers to collective information including not only contents (text information, image information, and voice information) such as advertisements of stores and guides to parking lots and medical facilities but also other information that should be distributed such as information concerning service enterprisers that provide the contents.

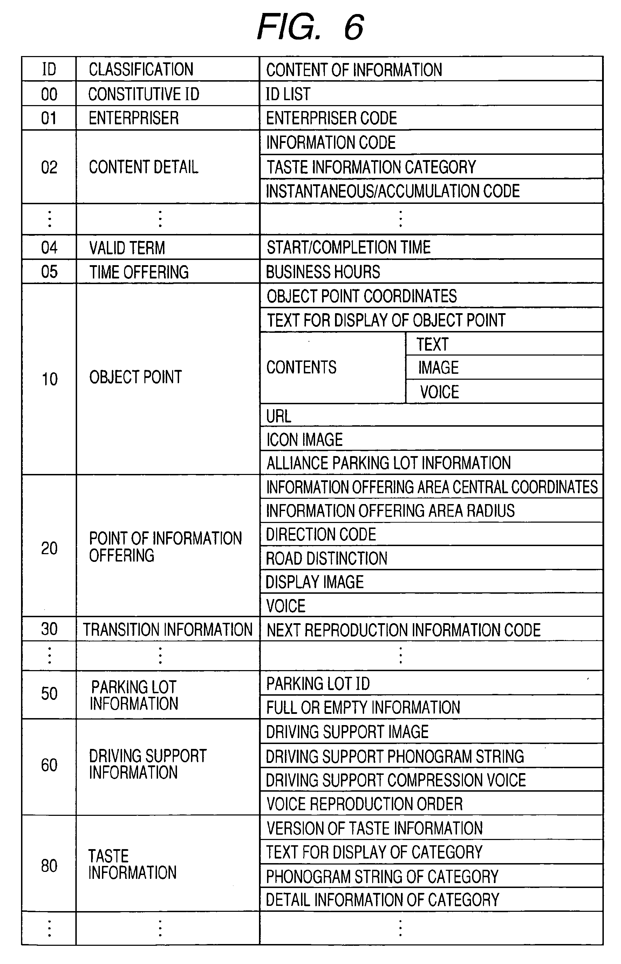

In FIG. 6, a format of the content information is shown as an example.

As shown in FIG. 6, the content information includes information to which IDs are respectively given, for example, a constitutive ID, an enterpriser, content details, a valid term, time offering, an object point, a point of information offering, transition information, parking lot information, driving support information, and taste information.

Information concerning a constitutive ID with ID=00 is information representing a list of IDs of information included in the content information. It is possible to determine which information is included in the content information by referring to the constitutive ID with ID=00.

Information concerning an enterpriser with ID=01 is information for specifying a service enterpriser and is, for example, an enterpriser code.

Content details with ID=02 are detail information concerning the content information. The content details are, for example, an information code individually allocated to the content information, a category of taste information to which the content information belongs, and instantaneous/accumulation code indicating whether reproduction is immediately performed or is accumulated.

A valid term with ID=04 is information indicating a valid term concerning reproduction of contents and represented by date and time indicating a start time and an end time of the valid term.

Time offering with ID=05 is information such as business hours in which a service can be provided at an object point explained later.

The object point refers to a store, a facility, or the like where provision of a service is performed. Information concerning an object point with ID=10 includes, for example, object point coordinates (latitude and longitude) indicating a location of the object point, a text for display of object point indicating a name or the like of the object point, a URL in offering information concerning a text, an image, voice, and an object point as contents related to explanation and the like of the object point through the IP communication, an icon image used in displaying the object point on a map, and alliance parking lot information.

The alliance parking lot information is information concerning parking lots designated for an alliance at the object point and is, for example, information concerning parking lot IDs indicating parking lots designated to be allied.

Information concerning a point of information offering with ID=20 is information concerning an information offering area where contents are desired to be reproduced. Concerning accumulated contents, pop-up notification for notifying that the contents are present is performed when the vehicle C enters from a certain direction on a road present in the information offering area. When an instruction for reproduction is performed, reproduction of the contents is performed. The information offering point with ID=20 is information for designating conditions in performing the pop-up notification, the content reproduction, and the like at this point. The information offering point includes, for example, central coordinates (latitude and longitude) of the information offering area, a radius, a direction code indicating an entering direction of the vehicle C, road distinction, a display image for the pop-up notification, and voice.

Transition information with ID=30 is information used when a plurality of pieces of content information including images are present in the contents at the object point with ID=20 and the images of the content information are transitioned and displayed. The transition information includes, for example, a next reproduction information code at the next transition destination.

Parking lot information with ID=50 is information concerning parking lots registered in advance in the center apparatus 30. The parking lot information is, for example, besides parking lot IDs of parking lots registered in advance in the center apparatus and full or empty information, vehicle limit, reservation possibility, a fee, and particulars. The full or empty information refers to information indicating a state of full or empty of a parking lot. Information such as "rain cover" can be included in the particulars. Therefore, it is possible to select, by referring to the information concerning the particulars, a parking lot corresponding to a desire of a user such as a parking lot where a vehicle is not get wet.

Driving support information with ID=60 is information as support for driving concerning driving in a site such as merging and branching, speed guide, and the like near an exit and an entrance of a parking lot and in the parking lot. The driving support information is, for example, information such as an image for driving support, a phonogram string used to perform voice guide, compression voice, and voice reproduction order.

Taste information with ID=80 is information used for selection of information to be distributed as explained above. The taste information includes, for example, a version of the taste information, a text for display indicating a name of a category set in the version, a phonogram string, detail information concerning the category.

As the content information, content information created in advance with the information with the respective IDs included therein is stored in the storage unit 34. During distribution, the control unit 31 selects content information to be distributed among these pieces of content information. The information with the respective IDs is included in the content information according necessity. The information with all the IDs is not always included in the content information. For example, if no alliance parking lot designated to be allied is present at an object point, alliance parking lot information is not included at the object point with ID=10.

The storage unit 34 has stored therein full or empty information concerning the parking lots registered in advance in the center apparatus 30. Specifically, the storage unit 34 has stored therein the full or empty information and information such as update date and time in association with the parking lot IDs. The full or empty information is updated by the control unit 31 at every fixed time such that information close to a current situation can be offered as the full or empty information.

The communication unit 35 includes a communication interface for performing the DSRC communication with the roadside apparatuses 20A and 20B and a communication interface for performing the IP communication with the roadside apparatus 20B and the radio communication access point 20C. The communication unit 35 executes communication processing by various communication systems according to communication control by the control unit 31.

Next, operation is explained.

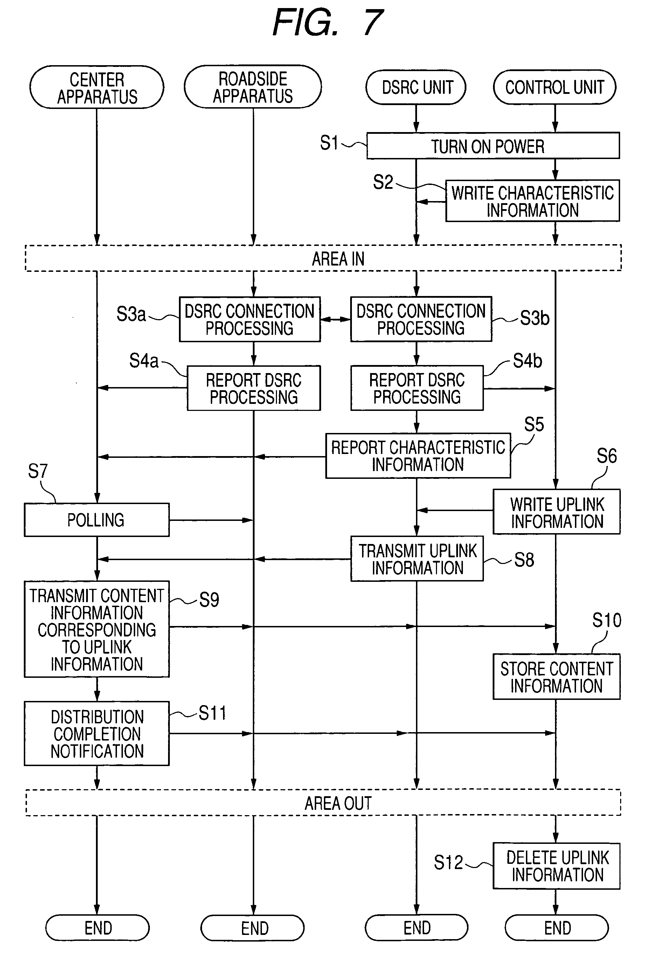

A flow of processing by the center apparatus 30, the roadside apparatuses 20A and 20B, and the vehicle-mounted device 10 in distributing content information is explained with reference to FIG. 7.

As shown in FIG. 7, first, when an engine of the vehicle C is started and power for the vehicle-mounted device 10 is turned on (step S1), the control section 4 of the vehicle-mounted device 10 generates characteristic information of the vehicle-mounted device 10 and writes the characteristic information in the uplink information storage area M of the storage unit 3c of the DSRC unit 3 (step S2). The control section 4 acquires the characteristic information by, for example, inquiring of the units such as the display unit 1e of the car navigation unit 1 or reading out information stored in the storage unit 1f in advance and writes the characteristic information in a corresponding area of the uplink information storage area M. Actually, the control section 4 outputs control information for instructing writing to the DSRC control unit 3a and the DSRC control unit 3a writes the characteristic information in the uplink information storage area M.

Thereafter, when the vehicle C starts traveling and enters the mutual communication area Z of the roadside apparatus 20A or 20B (area in), the roadside apparatus 20A or 20B detects the vehicle C and the DSRC control unit 3a of the vehicle-mounted device 10 starts connection processing by the DSRC communication with an uplink information storage unit (steps S3a and S3b). Specifically, the DSRC control unit 3a transmits a radio wave of the DSRC and, when a response from the vehicle-mounted device 10 is obtained, establishes a communication path. When the communication path is established, the roadside apparatus 20A or 20B transmits, to the center apparatus 30, notification information indicating that connection is completed (step S4a). On the other hand, the DSRC unit 3 of the vehicle-mounted device 10 outputs, to the control section 4, notification information indicating that the connection is completed (step S4b).

Subsequently, when the roadside apparatus 20A or 20B requests the DSRC unit 3 of the vehicle-mounted device 10 to transmit information in the uplink information storage area M, the DSRC unit 3 transmits the characteristic information written in the uplink information storage area M to the roadside apparatus 20A or 20B (step S5). The characteristic information is transmitted to the center apparatus 30 via the roadside apparatus 20A or 20B.

Subsequently, the control section 4 generates uplink information and writes the uplink information in the uplink information storage area M (step S6).

The center apparatus 30 periodically applies polling to the vehicle-mounted device 10 (step S7) and requests uplink information written in the uplink information storage area M.

The DSRC unit 3 of the vehicle-mounted device 10 transmits, according to the polling from the center apparatus 30, the uplink information stored in the uplink information storage area M to the center apparatus 30 via the roadside apparatus 20A or 20B (step S8).

The center apparatus 30 reads out, among the pieces of content information stored in the storage unit 34, content information corresponding to the received characteristic information and uplink information and transmits the content information to the vehicle-mounted device 10 (step S9). For example, if a language that can be treated by the characteristic information is "Japanese" and a category of the taste information is "foreign film", "cartoon film", or the like, the center apparatus 30 selects content information applicable to the Japanese language and a category of the taste information of which is "foreign film" or "cartoon film" and distributes the content information to the vehicle-mounted device 10.

In the vehicle-mounted device 10, the control section 4 stores the received content information in the storage unit 1f (step S10).

Thereafter, when the center apparatus 30 distributes all pieces of content information that should be distributed, the control unit 31 generates message information for notifying distribution completion and transmits the message information to the vehicle-mounted device 10 (step S11). This message information of distribution completion is message information for urging the user to perform area out. The vehicle-mounted device 10 displays this message information. Thereafter, when the communication with the roadside apparatus 20A or 20B is stopped for a fixed time, the control section 4 of the vehicle-mounted device 10 determines that the distribution is completed and performs control for deleting the uplink information (step S12). According to this control, the DSRC control unit 3a deletes the uplink information in the uplink information storage area M.

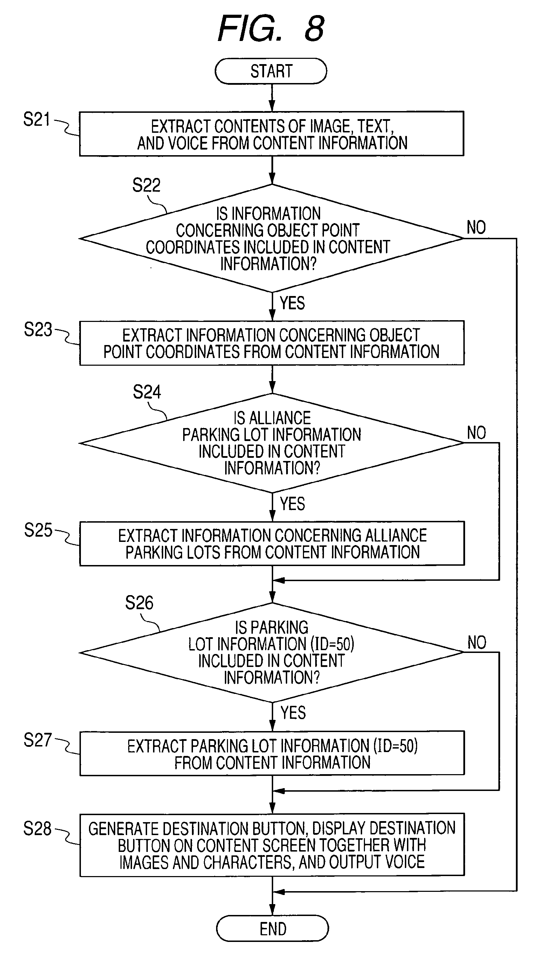

Next, a flow of processing in performing reproduction of content information in the vehicle-mounted device 10 is explained with reference to FIGS. 8 to 11. The car navigation control unit 1a controls processing explained below. However, the control section 4 may control the processing.

As shown in FIG. 8, first, the car navigation control unit 1a extracts contents (an image, a text, voice) from received content information referring to the information concerning the object point with ID=10 (step S21).

Further, the car navigation control unit 1a determines, referring to the information concerning the object point with ID=10 of the content information, whether information concerning object point coordinates is included in the content information (step S22). When the information concerning object point coordinates is not included (step S22; N), the car navigation control unit 1a completes this processing. When the information concerning object point coordinates is included (step 22; Y), the car navigation extracts the information concerning object point coordinates from the content information (step S23).

Subsequently, the car navigation control unit 1a determines, referring to the information concerning the object point with ID=10 of the content information, whether information concerning alliance parking lots is included in the content information (step S24). When the information concerning alliance parking lots is not included (step S24; N), the car navigation control unit 1a shifts to processing in step S26. When the information concerning appliance parking lots is included (step S24; Y), the car navigation control unit 1a extracts the information concerning alliance parking lots from the content information (step S25).

Subsequently, the car navigation control unit 1a determines presence or absence of the parking lot information with ID=50 in the content information (step S26). When the parking lot information is absent (step S26; N), the car navigation control unit 1a shifts to processing in step S28. When the parking lot information is present (step S26; Y), the car navigation control unit 1a extracts the parking lot information from the content information (step S27).

The car navigation control unit 1a creates a content screen on which images and characters as extracted contents are displayed and causes the display unit 1e to display the content screen. When there is voice as contents, the car navigation control unit 1a outputs the voice and performs reproduction of the content information. At this point, the car navigation control unit 1a generates, in the car navigation unit 1, a destination button for setting a destination in the car navigation unit 1 and displays the destination button on the content screen (step S28).

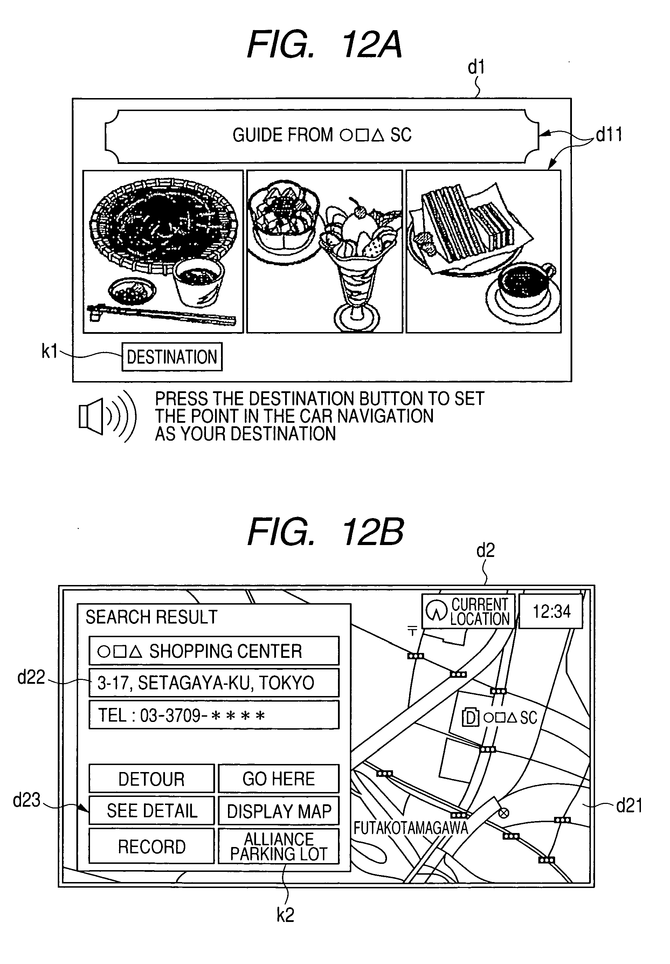

In FIG. 12A, an example of the content screen is shown.

As shown in FIG. 12A, images and characters d11 extracted from the content information are displayed on a content screen d1. The images and characters d11 relate to guide to a store "XYZ SC" as an object point. A destination button k1 is displayed on the content screen d1. At this point, voice guide such as "press the destination button to set the point in the car navigation as your destination" may be performed.

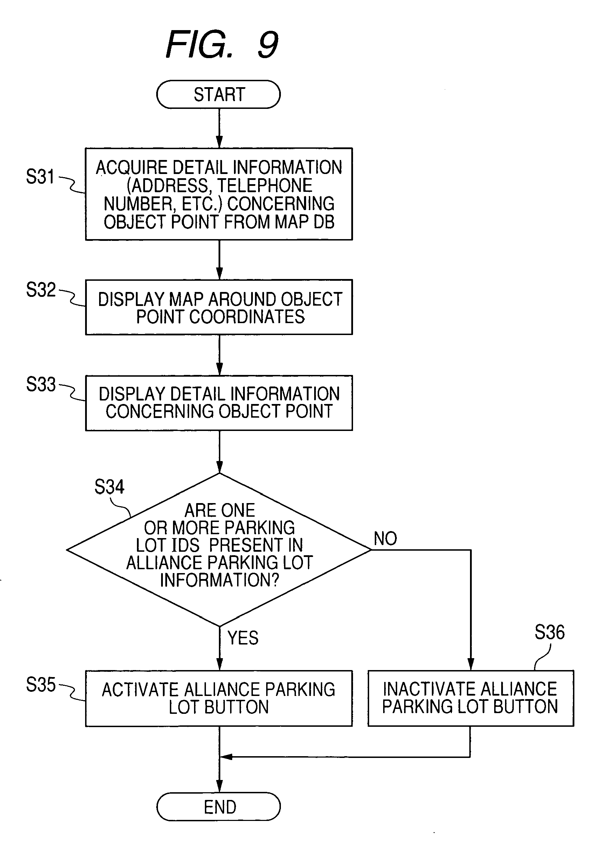

Referring to FIG. 9, processing performed when the destination button is depressed on the content screen is explained with reference to FIG. 9.

As shown in FIG. 9, the car navigation control unit 1a acquires, on the basis of the information concerning object point coordinates extracted from the content information, detail information concerning an object point from the map DB stored in the map storage unit 1c (step S31). Specifically, the car navigation control unit 1a acquires, as the detail information concerning an object point, information such as an address and a telephone number of a point having the same object point coordinates from the map DB.

Subsequently, the car navigation control unit 1a creates a map screen around the object point coordinates using the map DB stored in the map storage unit 1c and causes the display unit 1e to display the map screen (step S32). Further, the car navigation control unit 1a displays the detail information concerning an object point on this map screen (step S33).

In the map screen, when an alliance parking lot designated to be allied is present at the object point, information offering of the alliance parking lot is performed. Therefore, the car navigation control unit 1a determines whether one or more parking lot IDs are present in the information concerning alliance parking lots extracted from the content information (step S34). When at least parking lot ID is present (step S34; Y), the car navigation control unit 1a displays, on the map screen, an alliance parking lot button for the user to instruct information display of an alliance parking lot and activates the alliance parking lot button (step S35).

On the other hand, when no parking lot ID is present (step S34; N), the car navigation control unit 1a displays the alliance parking lot button on the map screen but inactivates the alliance parking lot button (step S36).

In this case, the car navigation control unit 1a may search for, on the basis of the parking lot DB stored by the map storage unit 1c, parking lots present in the periphery in a fixed range from the object point and, if such parking lots are present, display a peripheral parking lot button for instructing information display of the peripheral parking lots instead of the alliance parking lot button. Alternatively, the car navigation control unit 1a may display both the alliance parking lot button and the peripheral parking lot button and inactivate the alliance parking lot button and activate the peripheral parking lot button. Consequently, even when the information concerning alliance parking lots is not included in the content information, it is possible to perform information offering of parking lots that the user can use.

In FIG. 12B, an example of the map screen is shown.

As shown in FIG. 12B, a map d21 around the object point coordinates of the object point "XYZ SC" is displayed in the right half of a map screen d2 and detail information d22 such as an address and a telephone number of the object point is displayed in the left half. Various function buttons d23 such as a "go here" button for designating an object point as a destination, a "display map" button for displaying a map in enlargement, and an alliance parking lot button k2 are provided below the detail information d22. When no parking lot ID of an alliance parking lot is present as explained above, the alliance parking lot button k2 is inactivated, for example, the alliance parking lot button k2 is displayed in half-tone dot meshing or operation itself is neglected. On the other hand, when at least one parking lot ID of an alliance parking lot is present, operation of the alliance parking lot button is treated as active.

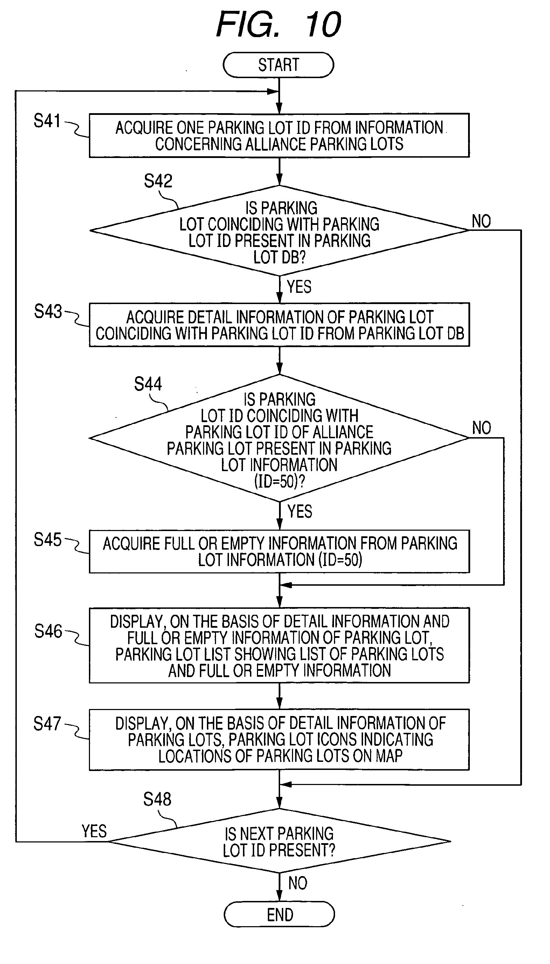

Next, a flow of processing by the vehicle-mounted device 10 performed when the alliance parking lot button is depressed is explained with reference to FIG. 10.

As shown in FIG. 10, the car navigation control unit 1a acquires one parking lot ID from alliance parking lot information extracted from content information (step S41). The car navigation control unit 1a performs search in the parking lot DB stored in the map storage unit 1c and determines presence or absence of a parking lot coinciding with the acquired parking lot ID (step S42). When no parking lot coinciding with the acquired parking lot ID is present (step S42; N), the car navigation control unit 1a shifts to processing in step S48.

On the other hand, when a parking lot coinciding with the acquired parking lot ID is present (step S42; Y), the car navigation control unit 1a acquires detail information concerning the parking lot coinciding with the acquired parking lot ID from the parking lot DB (step S43). The detail information concerning the parking lot is information such as a parking lot name, latitude and longitude, an address, a telephone number, and vehicle limit.

Further, the car navigation control unit 1a determines whether a parking lot ID coinciding with the acquired parking lot ID is present in the parking lot information with ID=50 extracted from the content information (step S44). When the parking lot ID coinciding with the acquired parking lot ID is present (step S44; Y), the car navigation control unit 1a acquires full or empty information corresponding to the parking lot ID from the parking lot information with ID=50 (step S45). On the other hand, when the parking lot ID coinciding with the acquired parking lot ID is absent (step S44; N), the car navigation control unit 1a shifts to step S46 without performing the processing in step S45.

In step S46, the car navigation control unit 1a creates, on the basis of the acquired detail information concerning alliance parking lots and full or empty information, a parking lot list showing a list of alliance parking lots and full or empty information concerning the respective alliance parking lots and displays the parking lot list on a map screen (step S46). The car navigation control unit 1a generates an update button for instructing update of the full or empty information shown in the parking lot list and displays the update button on the map screen. Further, the car navigation control unit 1a determines, on the basis of the detail information concerning the parking lot, locations (latitudes and longitudes) of the alliance parking lots and displays parking lot icons indicating the locations on the map screen (step S47).

Next, the car navigation control unit 1a determines whether the next parking lot ID is present in the information concerning alliance parking lots extracted from the content information (step S48). When the next parking lot ID is absent (step S48; N), the car navigation control unit 1a ends this processing. However, when the next parking lot ID is present (step S48; Y), the car navigation control unit 1a returns to the processing in step S41 and repeats the processing concerning the next parking lot ID. In this way, the car navigation control unit 1a determines presence or absence of detail information concerning parking lots and full or empty information concerning all parking lot IDs included in the parking lot information and creates a list of alliance parking lots.

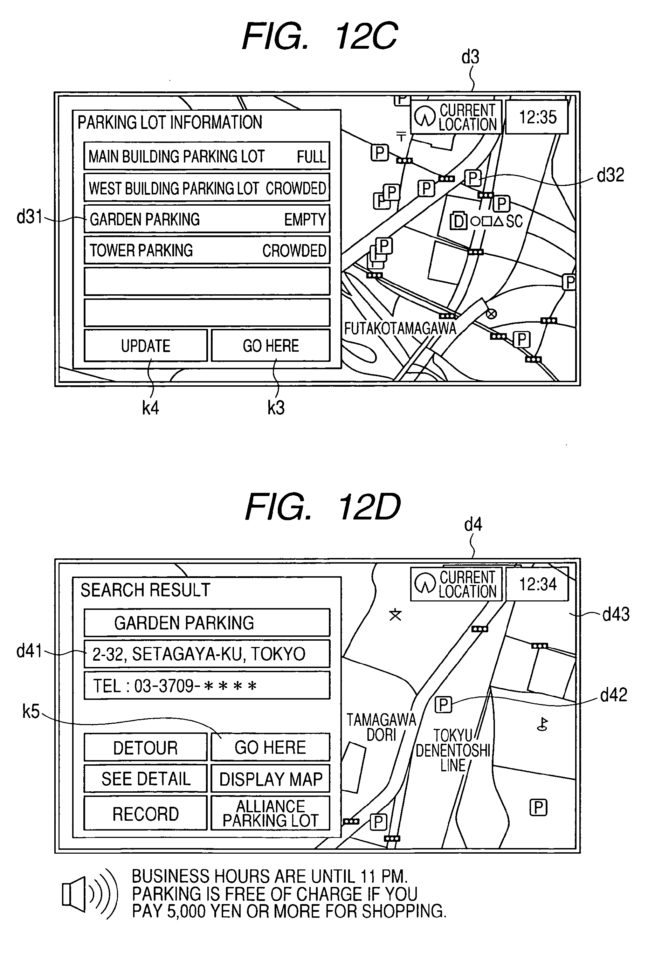

In FIG. 12C, an example of the map screen including the parking lot list is shown.

As shown in FIG. 12C, a list of names of alliance parking lots and a parking lot list d31 showing full or empty information of the alliance parking lots are shown on a map screen d3. A go-here button k3 for designating an alliance parking lot as a destination and an update button k4 are displayed below the parking lot list d31. On the other hand, parking lot icons d32 indicating locations of the alliance parking lots shown in the parking lot list are displayed on the map.

Instead of forming a list of all the alliance parking lots, alliance parking lots shown in the parking lot list may be selected on the basis of the vehicle information of the vehicle C.

For example, the car navigation control unit 1a reads out in advance the vehicle information stored in the storage unit 1f. The information concerning vehicle limit acquired from the parking lot DB stored by the vehicle-mounted device 10 is included in the detail information concerning the alliance parking lot acquired in step S43. Therefore, the car navigation control unit 1a collates the vehicle information and the information concerning vehicle limit of the alliance parking lot. If the height or the width of the vehicle C exceeds height or width limited in the alliance parking lot, the car navigation control unit 1a deletes the alliance parking lot from the parking lot list and selects only alliance parking lots satisfying the vehicle limit to form a list of the alliance parking lots. Consequently, it is possible to offer only information concerning alliance parking lots that the vehicle C can use.

Alternatively, when the parking lot information with ID=50 is included in the content information, the information concerning vehicle limit of parking lots registered in the center apparatus 30 is included in the parking lot information. Therefore, the car navigation control unit 1a may determine, on the basis of the information concerning vehicle limit and the vehicle information concerning the vehicle C stored by the vehicle-mounted device 10, whether the vehicle limit is satisfied and select an alliance parking lot shown in the parking lot list. The car navigation control unit 1a may select an alliance parking lot corresponding to a desire of the user referring to the particulars of the parking lot information with ID=50.

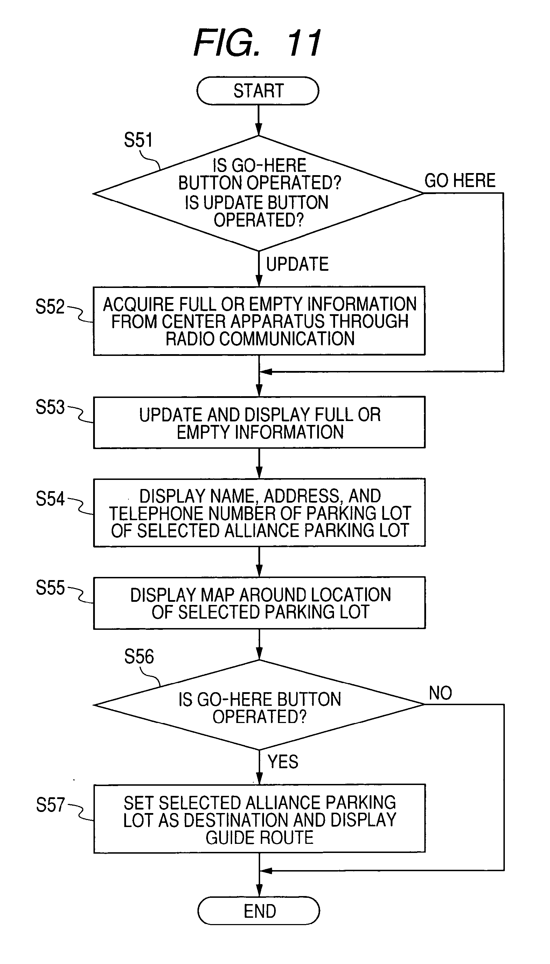

Next, processing executed by the vehicle-mounted device 10 when the go-here button or the update button is operated is explained with reference to FIG. 11.

As shown in FIG. 11, when the update button is operated (step S51; update), the car navigation control unit 1a performs processing for acquiring, from the center apparatus 30, full or empty information concerning the alliance parking lots shown in the parking lot list (step S52).

Specifically, the car navigation control unit 1a generates request information for requesting full or empty information and transmits the request information to the center apparatus 30 via the IP communication unit 5 together with parking lot IDs of the alliance parking lots shown in the parking lot list. In the center apparatus 30, the control unit 31 reads out, from the storage unit 34, latest full or empty information corresponding to the parking lot IDs received together with the request information and transmits the latest full or empty information to the vehicle-mounted device 10. Therefore, the vehicle-mounted device 10 can acquire the latest full or empty information. The car navigation control unit 1a updates, on the basis of the acquired full or empty information, the full or empty information of the parking lot list displayed on the map screen (step S53).

On the other hand, when the go-here button is operated rather than the update button after any one of the alliance parking lots is selected from the parking lot list (step S51; go here), the car navigation control unit 1a shifts to processing in step S54 without performing the processing in steps S52 and S53.

In step S54, the car navigation control unit 1a displays, on the basis of the detail information concerning alliance parking lots acquired from the parking lot DB, a parking lot name, an address, and a telephone number of the selected alliance parking lot on the map screen (step S54). At this point, when fee information, privilege information, business information, and the like is present in the detail information concerning the alliance parking lots, voice guide such as "Business hours are until 11 pm. Parking is free of charge for 2 hours if you pay 5,000 yen or more for shopping." may be performed on the basis of those kinds of information.

Next, the car navigation control unit 1a displays a map around the location of the selected parking lot (step S55).

In FIG. 12D, an example of the map screen in that case is shown.

As shown in FIG. 12D, the car navigation control unit 1a displays detail information d41 such as an address of the selected alliance parking lot on a map screen d4. The car navigation control unit 1a displays a map d43 around the location of the selected alliance parking lot (a location indicated by a parking lot icon d42). The car navigation control unit 1a displays a go-here button k5 below the detail information d41 of the alliance parking lot.

When the go-here button is operated for input on the map screen (step S56; Y), the car navigation control unit 1a sets the selected alliance parking lot as a destination of a guide route. The car navigation control unit 1a performs calculation of a guide route from the current location to the destination, creates a map screen for performing guide to the guide route, and displays the map screen (step S57). For example, the car navigation control unit 1a displays roads and points related to the guide route on the map screen shown in FIG. 12D by, for example, pointing the roads and the points with arrows.

As explained above, according to this embodiment, when the information concerning the object point with ID=10 is included in content information to be distributed and when an alliance parking lot is present at the object point, the center apparatus 30 transmits content information including alliance parking lot information to the vehicle-mounted device 10. Therefore, the vehicle-mounted device 10 can determine presence or absence of alliance of a parking lot and easily specify the alliance parking lot and acquire detail information from the parking lot DB. Therefore, the vehicle-mounted device 10 can accurately and quickly perform information offering of the alliance parking lot according to content reproduction of the object point.

The center apparatus 30 transmits content information including full or empty information concerning parking lots registered in advance. Therefore, the vehicle-mounted device 10 can easily acquire full or empty information concerning parking lots including alliance parking lots and quickly perform offering of the full or empty information.

On the other hand, the vehicle-mounted device 10 can create, on the basis of the alliance parking lot information and the full or empty information received from the center apparatus 30, a parking lot list showing a list of alliance parking lots and full or empty information of the alliance parking lots, display the list of alliance parking lots and the parking lot list, and accurately and promptly offer information concerning the alliance parking lots to the user.

When the destination button is provided and instruction input for setting an alliance parking lot selected from the parking lot list as a destination is performed by the operation of this destination button, a guide route having the selected alliance parking lot as a destination is calculated and displayed. Consequently, the user does not need to input an address or the like of an alliance parking lot for destination setting and can smoothly perform the destination setting. Such a configuration for allowing the destination setting is particularly effective when a plurality of pieces of content information are received and there are a plurality of object points that the user desires to go.

Since the vehicle-mounted device 10 can perform the IP communication with the center apparatus 30, even after the vehicle C exits the mutual communication area Z of the DSRC communication, the vehicle-mounted device 10 can acquire full or empty information of the parking lots through the IP communication. Latest information is required concerning fluctuating information such as the full or empty information. Therefore, accurate information offering can be performed by adopting a configuration in which real-time full or empty information can be acquired even on the outside of the mutual communication area Z.

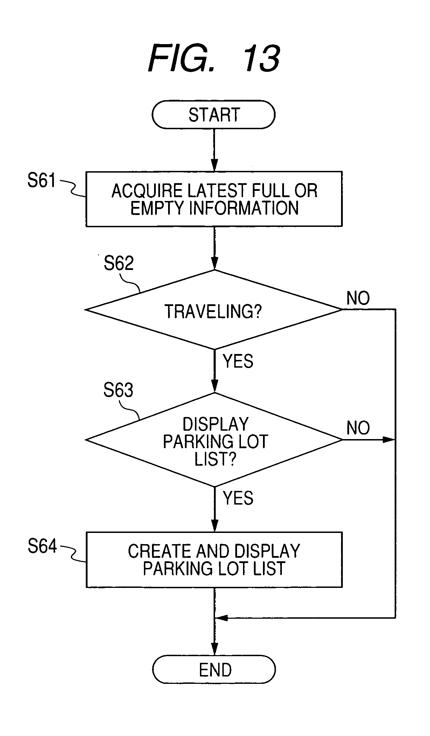

In the first embodiment, when the vehicle C reaches a predetermined range from an object point, the car navigation control unit 1a may urge the user to display a parking lot list by, for example, displaying a guide screen indicating, for example, whether the parking lot list is displayed. Referring to FIG. 13, after acquiring latest full or empty information through the IP communication (step S61), the car navigation control unit 1a determines whether the vehicle C is traveling (step S62). When the vehicle C is traveling (step S62; Y), the car navigation control unit 1a displays a screen including a list display button for instructing display of the parking lot list. When the list display button is operated (step S63; Y), the car navigation control unit 1a performs the processing shown in FIG. 10 to display the parking lot list of alliance parking lots (step S64).

### (Second Embodiment)

In a second embodiment of the present invention, a case in which information concerning parking lots registered in advance in a center apparatus is offered as information concerning parking lots is explained.

The configurations of a distribution system and a vehicle-mounted device according to the second embodiment are the same as those in the first embodiment and only the operations thereof are different. Therefore, the same components are denoted by the same reference numerals and signs and only different operation sections are explained.

Processing in distributing content information from the center apparatus 30 to the vehicle-mounted device 10 is the same as the processing explained in the first embodiment (see FIG. 7). Specifically, the center apparatus 30 transmits, as information concerning parking lots to be distributed, content information including parking lot information (ID=50), in which parking lot IDs of parking lots registered in advance in the center apparatus 30 are set, to the vehicle-mounted device 10.

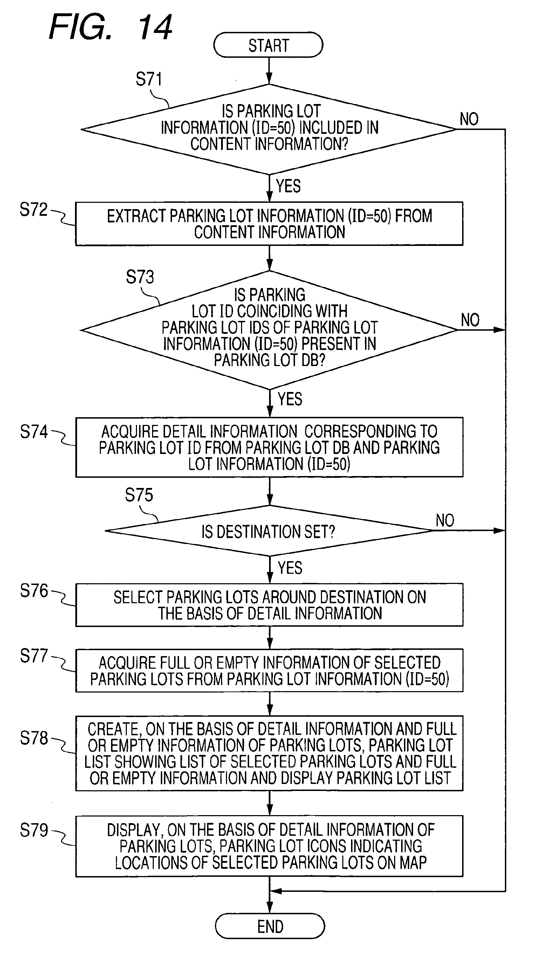

Processing by the vehicle-mounted device 10 that receives content information is explained with reference to FIG. 14.

As shown in FIG. 14, first, when the parking lot information with ID=50 is included in the received content information (step S71; Y), the car navigation control unit 1a extracts the parking lot information with ID=50 from the content information (step S72). When the parking lot information with ID=50 is not included (step S71; N), the car navigation control unit 1a completes this processing.

The car navigation control unit 1a determines, referring to the parking lot DB stored in the map storage unit 1c, whether a parking lot ID coinciding with parking lot IDs included in the parking lot information with ID=50 is present in the parking lot DB (step S73). When the coinciding parking lot ID is absent (step S73; N), the car navigation control unit 1a completes this processing. When the coinciding parking lot ID is present (step S73; Y), the car navigation control unit 1a acquires detail information corresponding to the coinciding parking lot ID from the parking lot DB and the parking lot information with ID=50 (step S74). As the detail information, for example, the car navigation control unit 1a acquires information such as a parking lot name, latitude and longitude, an address, a telephone number, and vehicle limit from the parking lot DB and acquires information such as particulars and vehicle limit from the parking lot information with ID=50.

Subsequently, the car navigation control unit 1a determines presence or absence of a destination set as a destination of a guide route (step S75). When the destination is not set (step S75; N), the car navigation control unit 1a completes this processing. When the destination is set (step S75; Y), the car navigation control unit 1a selects, on the basis of the acquired detail information concerning parking lots, parking lots present around the destination among parking lots indicated by the parking lot IDs of the parking lot information with ID=50 (step S76). For example, the car navigation control unit 1a selects parking lots present within a predetermined range such as a radius of 1 km from latitude and longitude of the destination referring to- the latitudes and longitudes of the parking lots in the acquired detail information.

Subsequently, the car navigation control unit 1a acquires full or empty information of the selected parking lots from the parking lot information with ID=50 (step S77). Subsequently, the car navigation control unit 1a creates, on the basis of the detail information and the full or empty information of parking lots acquired concerning the selected parking lots, a parking lot list showing a list of the selected parking lots and full or empty information of the parking lots and causes the display unit 1e to display the parking lot list (step S78). As in the first embodiment, parking lots shown in the parking lot list may be selected on the basis of the vehicle information stored by the vehicle-mounted device 10 and the information concerning vehicle limit of the parking lots acquired from the parking lot DB or the information concerning vehicle limit acquired from the parking lot information with ID=50 and parking lots corresponding to a desire of the user may be selected on the basis of the particulars acquired from the parking lot information with ID=50.

The car navigation control unit 1a determines the locations (latitudes and longitudes) of the selected parking lots on the basis of the detail information of the parking lots and causes the display unit 1e to display a map on which parking lot icons indicating the locations are arranged (step S79). For example, the parking lot list and the map can be displayed in the same manner as the display example shown in FIG. 12C. The parking lot list d31 includes a list of names of parking lots and full or empty information concerning the parking lots. The parking lot icons d32 are displayed around the destination "XYZ SC".

As in the first embodiment, the car navigation control unit 1a may display the update button k4 and acquires latest full or empty information from the center apparatus 30 through the IP communication according to the operation of the update button k4. The car navigation control unit 1a may display, when any one parking lot is selected in the parking lot list, detail information such as an address and a telephone number of the parking lot.

As explained above, according to the second embodiment, if the parking lot information with ID=50 to be distributed is present, the center apparatus 30 transmits content information including the parking lot information to the vehicle-mounted device 10. Therefore, the vehicle-mounted device 10 can easily determine parking lots around a destination on the basis of parking lot IDs included in the parking lot information and acquire detail information from the parking lot DB. Therefore, the vehicle-mounted device 10 can accurately and quickly perform information offering of the parking lots around the destination.

The center apparatus 30 transmits content information including full or empty information concerning parking lots registered in advance to the vehicle-mounted device 10. Therefore, the vehicle-mounted device 10 can easily acquire full or empty information concerning parking lots including parking lots around the destination and quickly perform offering of the full or empty information.

On the other hand, the vehicle-mounted device 10 can create, on the basis of parking lot information and full or empty information received from the center apparatus 30a parking lot list showing a list of parking lots around the destination and full or empty information concerning the parking lots and display the parking lot list. The vehicle-mounted device can accurately and quickly offer information concerning the parking lots around the destination to the user.

The first embodiment of the second embodiment is a preferred example of the present invention. The present invention is not limited to the embodiment.

For example, in the example explained above, in the vehicle-mounted device 10, the control section 4 assumes the control during reception of content information and the car navigation control unit 1a assumes the control during reproduction of the content information. However, any control means such as the control section 4, the car navigation control unit 1a, or the DSRC control unit 3a may assume the control.

## Claims

1. A distribution system comprising:
a center apparatus that distributes content information; and a vehicle-mounted device, wherein
the center apparatus includes: a control unit, a storage unit, and a communication unit,
the storage unit has stored therein the content information,
the control unit determines presence or absence of information concerning parking lots by referring to the content information stored in the storage unit, and
when the control unit determines that information concerning parking lots to be distributed is present, the center apparatus transmits, with the communication unit, content information including the information concerning parking lots to the vehicle-mounted device.

2. The distribution system according to claim 1, wherein
the information concerning parking lots is information concerning alliance parking lots designated for an alliance at an object point where a service is provided, and
the vehicle-mounted device
creates, when the information concerning the alliance parking lots is included in the content information received from the center apparatus, a parking lot list showing a list of alliance parking lots on the basis of the information concerning alliance parking lots and displays the parking lot list.

3. The distribution system according to claim 2, wherein
the vehicle-mounted device
calculates, when input for selecting any one alliance parking lot among the alliance parking lots shown in the parking lot list as a destination is performed, a guide route having, as a destination, the alliance parking lot selected according to the input and displays the guide route.

4. The distribution system according to claim 1, wherein
the information concerning parking lots is information concerning parking lots registered in advance in the center apparatus, and
the vehicle-mounted device
searches for, when the information concerning parking lots registered in advance in the center apparatus is included in the content information received from the center apparatus, parking lots around the destination on the basis of the information concerning parking lots, creates a parking lot list showing a list of searched parking lots, and displays the parking lot list.

5. The distribution system according to any one of claims 1 to 4, wherein
the center apparatus
transmits full or empty information concerning parking lots registered in advance to the vehicle-mounted device with the full or empty information included in the content information to be distributed.

6. The distribution system according to claim 5, wherein
the vehicle-mounted device
creates, when the full or empty information is included in the content information received from the center apparatus, on the basis of the full or empty information, the parking lot list showing full or empty information concerning the respective parking lots and displays the parking lot list.

7. The distribution system according to any one of claims 2 to 6, wherein
the vehicle-mounted device
stores vehicle information concerning a vehicle mounted with the vehicle-mounted device and information concerning vehicle limit of parking lots registered in the vehicle-mounted device in advance and selects parking lots shown in the parking lot list on the basis of the stored vehicle information and information concerning vehicle limit.

8. The distribution system according to any one of claims 2 to 6, wherein
the center apparatus
transmits content information including information concerning vehicle limit of parking lots registered in advance to the vehicle-mounted device, and
the vehicle-mounted device
stores vehicle information concerning a vehicle mounted with the vehicle mounted device and selects, when information concerning vehicle limit of parking lots is included in the content information received from the center apparatus, parking lots shown in the parking lot list on the basis of the information concerning vehicle limit and the stored vehicle information.

9. The distribution system according to any one of claims 5 to 8, wherein
the vehicle-mounted device
receives content information from the center apparatus through DSRC communication and
acquires full or empty information concerning parking lots registered in advance in the center apparatus from the center apparatus through IP communication.

10. A vehicle-mounted device comprising:
display means;
DSRC communication means for performing, via a roadside apparatus, DSRC communication with a center apparatus that distributes content information; and
control means for creating, when information concerning alliance parking lots designated for an alliance at an object point where a service is provided is included in the content information received from the center apparatus, a parking lot list showing a list of alliance parking lots on the basis of the information concerning alliance parking lots and displays the parking lot list on the display means.

11. The vehicle-mounted device according to claim 10, comprising
input means, wherein
the controls means calculates, when input for selecting any one alliance parking lot among the alliance parking lots shown in the parking lot list as a destination is performed, a guide route having, as a destination, the alliance parking lot selected according to the input and displays the guide route.

12. A vehicle-mounted device comprising:
display means;
DSRC communication means for performing, via a roadside apparatus, DSRC communication with a center apparatus that distributes content information; and
control means for searching for, when information concerning parking lots registered in advance in the center apparatus is included in the content information received from the center apparatus, parking lots around a destination on the basis of the information concerning parking lots, creating a parking lot list showing a list of the searched parking lots, and displaying the parking lot list on the display means.

13. The vehicle-mounted device according to any one of claims 10 to 12, wherein
the control means creates, when full or empty information concerning parking lots registered in advance in the center apparatus is included in the content information received from the center apparatus, on the basis of the full or empty information, a parking lot list showing full or empty information concerning the respective parking lots and displays the parking lot list.

14. The vehicle-mounted device according to any one of claims 10 to 13, comprising
storing means for storing vehicle information concerning a vehicle mounted with the vehicle-mounted device and information concerning vehicle limit of parking lots registered in the vehicle-mounted device in advance, wherein
the control means selects parking lots shown in the parking lot list on the basis of the stored vehicle information and information concerning vehicle limit.

15. The vehicle-mounted device according to any one of claims 10 to 13, comprising
storing means for storing vehicle information concerning a vehicle mounted with the vehicle-mounted device, wherein
the control means selects, when information concerning vehicle limit of parking lots is included in the content information received from the center apparatus, parking lots shown in the parking lot list on the basis of the information concerning vehicle limit and the stored vehicle information.

16. The vehicle-mounted device according to any one of claims 10 to 15, comprising
IP communication means for performing IP communication with the center apparatus, wherein
the control means acquires full or empty information of parking lots registered in advance in the center apparatus from the center apparatus via the IP communication means.
